# EUROPEAN PATENT APPLICATION

(11) **EP 2 104 050 A1**
(43) Date of publication of application: **23.09.2009**
(21) Application number: 09153462.8
(22) Date of filing: 23.02.2009
(51) Int. Cl.: G06F 21/00

(54) **On-Disk software image encryption**

(30) Priority: 19.03.2008 US 51746
(71) Applicant: SafeNet, Inc., Belcamp, MD 21017 (US)
(72) Inventor: Prabir, Paul, Santa Clara, CA 95051 (US)
(74) Representative: Jones, Keith William

(57) **Abstract**

A technique is introduced to support on-disk software image encryption. Image of a software component deployed to a host is encrypted when the image is created and/or its content is changed, before such image of the software component is being saved to a non-volatile storage of the host. The encrypted image of the software component is decrypted only at startup and/or resume time of the software component. Once decrypted, the image of the software component is loaded into a volatile storage of the host so that the software component can be up and running.

## Description

### BACKGROUND

Images of a software component are often created and stored in a non-volatile storage of a hosting machine (host) when the software component is deployed or migrated to the host. When the software component is being started or resumed operation on the host, the images of the software component stored in the non-volatile storage of the host are loaded to a volatile storage of the host. The content of such images can be changed when, by way of example and not by way of limitation, the software component is being updated.

The images of the software component may contain sensitive information and/or intellectual property of the software component and/or its user. If such images are accessed by an unauthorized third party or the storage unit containing the images is lost or stolen, the sensitive information in the images will be at risk.

The foregoing examples of the related art and limitations related therewith are intended to be illustrative and not exclusive. Other limitations of the related art will become apparent upon a reading of the specification and a study of the drawings.

### SUMMARY

A technique is introduced to support on-disk software image encryption. Image of a software component deployed to a host is encrypted when the image is created and/or its content is changed, before such image of the software component is being saved to a non-volatile storage of the host. The encrypted image of the software component is decrypted only at startup and/or resume time of the software component. Once decrypted, the image of the software component is loaded into a volatile storage of the host so that the software component can be up and running.

Under such technique, only encrypted image of the software component is ever stored in a non-volatile storage of the host, and decrypted image resides in the volatile storage of the host only when the software component is up and running on the host. Consequently, the risk of any portion of the image of the software component being tampered by an unauthorized third party is significantly reduced.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

### brief description of the drawings

FIG. 1 depicts an example of a system to support on-disk software image encryption.

FIG. 2 depicts an example of the data securing engine.

FIG. 3 depicts a flowchart of an example of a process to support on-disk software image encryption.

FIG. 4 depicts an example of a system to support on-disk virtual machine image encryption.

### detailed DESCRIPTION OF embodiments

Although the diagrams depict components as functionally separate, such depiction is merely for illustrative purposes. It will be apparent to those skilled in the art that the components portrayed in this figure can be arbitrarily combined or divided into separate software, firmware and/or hardware components. Furthermore, it will also be apparent to those skilled in the art that such components, regardless of how they are combined or divided, can execute on the same computing device or multiple computing devices, and wherein the multiple computing devices can be connected by one or more networks.

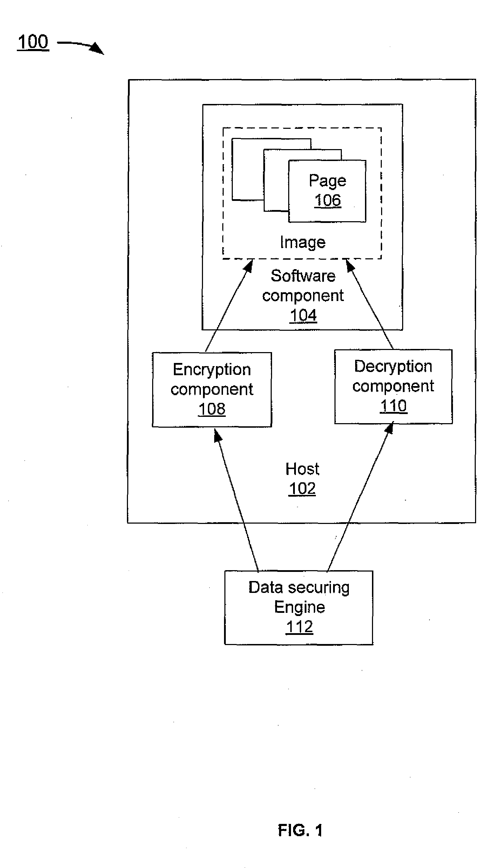

FIG. 1 depicts an example of a system 100 to support on-disk software image encryption. In the example of FIG. 1, the system 100 includes a host 102, a software component 104, which image includes a plurality of pages 106, an encryption component 108, a decryption component 110, and a data securing engine 112.

In the example of FIG. 1, the host 102 can be a computing device, a communication device, s storage device, or any electronic device capable of running the software component 104, wherein the host contains at least a processor, a volatile storage (memory), and a non-volatile storage (not shown). For non-limiting examples, a host can be but is not limited to, a laptop PC, a desktop PC, a tablet PC, an iPod, a PDA, or a server machine. A storage device can be but is not limited to a hard disk drive, a flash memory drive, or any portable storage device. A communication device can be but is not limited to a mobile phone.

In the example of FIG. 1, the volatile storage of the host 102 can be but is not limited to, a RAM, a solid state storage, or any other form of volatile storage that only stores the image of the software component 104 when the software component is running on the host 102. On the other hand, the non-volatile storage of the host 102 can be but is not limited to a hard disk drive, a ROM, a magnetic storage, an optic disc drive, or any other form of non-volatile storage that is operable to retains the image of the software component even when the host is powered off.

In the example of FIG. 1, the software component 104 can be an (operating) system software, an application software, a firmware, or a (software) execution environment that is operable to run on the host 102. For non-limiting examples, the software component can be a part of or operable under Windows®, SUN-OS, UNIX, or Linux operating systems and their associated file management systems.

In the example of FIG. 1, an image of the software component 104 refers to the storage space occupied by the software component in the volatile and/or the non-volatile storage of the host 102. The image of the software component may include a plurality of pages 106, each of which is a fixed length block of instructions, data, or both, of the software component 104 in either volatile or non-volatile storage of the host 102.

In the example of FIG. 1, the encryption component 108 is a software component, which while in operation on the host 102, is capable of encrypting one or more pages and/or blocks of the software component 104 so that an unauthorized party will not be able to exact the sensitive data or content contained in the pages or blocks even if the party has access to the pages or blocks.

In the example of FIG. 1, the decryption component 110 can be a software, firmware, hardware, or combination thereof which while in operation on the host 102, is capable of decrypting the one or more pages and/or blocks of the software component 104 that have been encrypted for data security purposes. Once decrypted, the sensitive data or content contained in the pages or blocks can be exacted by an authorized party.

In the example of FIG. 1, the data securing engine 112 is coupled to the encryption component 108 and the decryption component 110. The data securing engine 112 is operable to perform at least two major operations: encrypting the pages 106 of the image of the software component 104 via the encryption component 108 when the image is created and/or its content is changed before saving the pages to a non-volatile storage of the host 102, and decrypting the encrypted pages of the image of the software component 104 via the decryption component 110 only at the time the software component 104 starts up and/or resumes running on the host 102. The term "engine," as used herein, generally refers to any combination of software, firmware, hardware, or other component that is used to effectuate a purpose.

While the system 100 depicted in Figure 1 is in operation, the data securing engine 112 detects if a new image of the software component 104 is created or the content of an existing image has been changed. If such triggering event is detected, the data securing engine triggers the encryption operation of the image of the software component 102 via the encryption component 108 before saving the image to a non-volatile storage of the host 102. When the software component 104 is later to be started or resumed operation on the host 102, the data securing engine triggers the decryption operation of the image of the software component 104 via the decryption component 110 before loading the image to a volatile storage of the host 102 from where the software component runs.

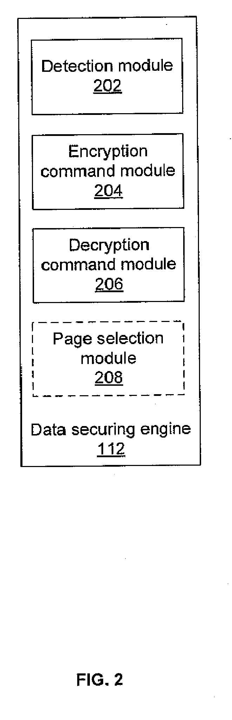

FIG. 2 depicts an example of the data securing engine 112, which includes at least a detection module 202, an encryption command module 204, a decryption command module 206, and optionally a page selection module 208.

In the example of FIG. 2, the detection module 202 in the data securing engine 112 is operable to determine when the encrypting and decrypting operation on the image of the software component 104 should be triggered. More specifically, an encrypting operation on the image is triggered only when the detection module 202 detects the creation of a new image of the software component 104 or a change has been made to the content of an existing image of the software component 104; an decrypting operation on the image is triggered only when the detection module 202 detects or is notified by the host 102 that the software component is being started or resumed operation on the host 102, and consequently its image needs to be loaded into the volatile memory storage of the host 102.

In the example of FIG. 2, the encryption command module 204 in the data securing engine 112 is capable of utilizing the encryption component 108 to encrypt every page or block of the image of the software component 104 when the detection module 202 triggers an encryption operation. On the other hand, the decryption command module 206 in the data securing engine 112 is capable of utilizing the decryption component 110 to decrypt every previously encrypted page or block of the image of the software component 104 when the detection module 202 triggers a decryption operation.

In some embodiments, the encryption command module 204 and the decryption command module 206 in the example of FIG. 2 can utilize one or more cryptographic keys obtained from either another physical or virtual device such as DataSecure over a network or a removable storage device. Here, the network can be a communication network based on certain communication protocols, such as TCP/IP protocol. Such network can be but is not limited to, internet, intranet, wide area network (WAN), local area network (LAN), wireless network, Bluetooth, WiFi, and mobile communication network. The physical connections of the network and the communication protocols are well known to those of skill in the art. The removable device can be but is not limited to a smart card, a USB drive, or a portable disk drive.

When the number of pages of the image of the software component 104 is huge, data security can be selectively enforced. More specifically, instead of encrypting the whole image of the software component, the page selection module 208 in the example of FIG. 2 is operable to select only those pages of the software component that contain sensitive data or information for encryption. Such sensitive information, for non-limiting examples, may include sensitive or confidential user data, and/or security information necessary to access the data, such as encrypting or decrypting keys. Alternatively, the page selection module 208 is operable to select a portion of the image of the software component 104 to be encrypted and decrypted and skips another portion of the image for encryption and decryption based on one or more of: address range of the pages, content, and owner of the software component. The encryption operation focuses on the selection portion of the image of the software component only, while the portion of the image not selected will be skipped for encryption. Herein, the skipped portion of the software component may include portions of the software component that do not contain or deal with sensitive data, such as an installed driver and/or an application not dealing with sensitive data of the software component.

In some embodiments, the data securing engine 112 in FIG. 1 and FIG.2 is also operable to intercept a snapshot of the image of the software component 104 when such snapshot is taken, encrypt the snapshot of the image before saving the image to a non-volatile storage of the host 102, and decrypts the encrypted snapshot of the image before loading the snapshot into a volatile storage of the host. Here, the snapshot of the image a set of storage reference markers, or pointers, to the image of the software component stored in the volatile and/or non-volatile storage of the host 102. A snapshot streamlines access to the stored image and can speed up the process of data recovery and starting and/or resuming the software component.

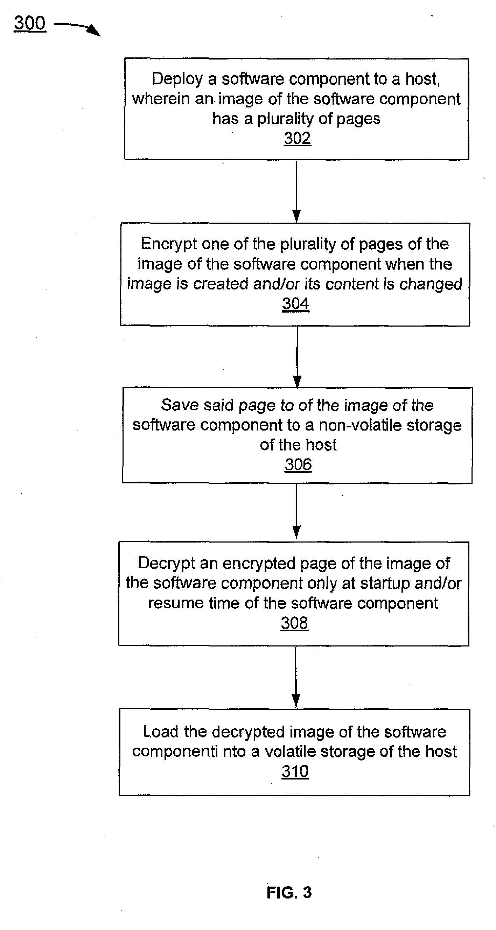

FIG. 3 depicts a flowchart of an example of a process to support on-disk software image encryption. Although this figure depicts functional steps in a particular order for purposes of illustration, the process is not limited to any particular order or arrangement of steps. One skilled in the art will appreciate that the various steps portrayed in this figure could be omitted, rearranged, combined and/or adapted in various ways.

In the example of FIG. 3, the flowchart 300 starts at block 302, where a software component is deployed to a host, wherein an image of the software component has a plurality of pages. Such image of the software may contain sensitive information of the software component and has to be secured.

The flowchart 300 continues to block 304 where one of a plurality of pages of the image of the software component is encrypted when the image is created and/or its content is changed. The encryption process herein is performed by an encryption component at the instruction of a data securing engine, which detects the event triggering the encryption and optionally selects the portion of the image of the software component to be encrypted. The flowchart 300 continues to block 306 where the encrypted image of the software component is securely saved to a non-volatile storage of the host.

The flowchart 300 continues to block 308 where an encrypted page of the image of the software component is decrypted only at startup and/or resume time of the software component. The decryption process herein is performed by a decryption component at the instruction of the data securing engine, which only triggers the decryption process when the software component is to be started or resumed. In addition, the pages that have been encrypted are identified before decryption since not every page of the software component has been selected for encryption. The flowchart 300 ends at block 310 where the decrypted image is loaded into a volatile storage of the host so that the software component can be up and running.

During the whole process described above, only encrypted image of the software component is ever stored in a non-volatile storage of the host, and decrypted image resides in the volatile storage of the host only when the software component is up and running on the host. Consequently, the risk of any portion of the image of the software component 104 being tampered by an unauthorized third party is significantly reduced.

### On-disk virtual machine image encryption

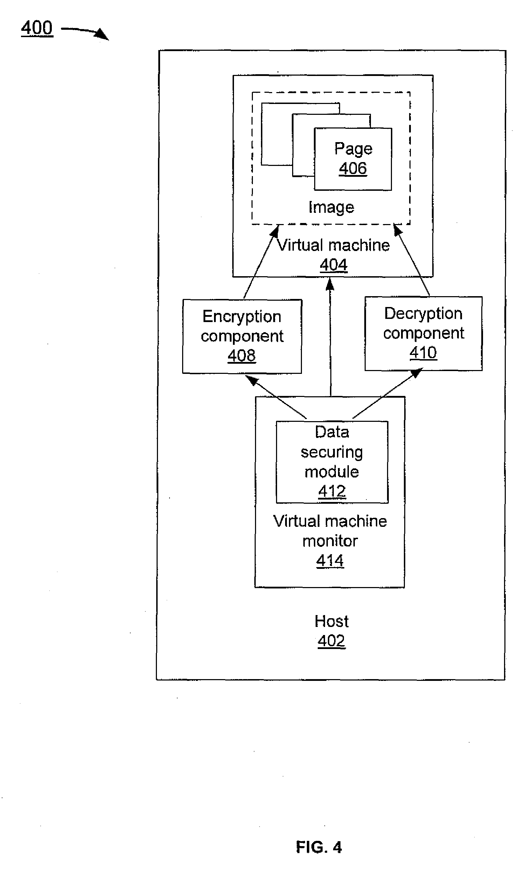

FIG. 4 depicts an example of a system 400 to support on-disk virtual machine image encryption. In the example of Figure 4, the system 400 includes a host 402, a virtual machine 404, which image includes a plurality of pages 406, an encryption component 408, a decryption component 410, a data securing module 412, and a virtual machine monitor 414.

In the example of FIG. 4, the virtual machine 404 is a virtualized software executing environment that enables a user to run software on an abstract machine on a host under an operating system such as a Window@, SUN-OS, UNIX, or Linux operating system and its associated file management system. Traditionally, the computing environment on a host follows the "One App, One Box" model, where one operating system together with one application server composed of multiple threads and processes is tied to a single physical host. Such model leads to higher costs because each host requires maintenance and software licenses, and less flexibility because the application load is not matched to the server's capacity, causing over/under utilization. Under a virtualized environment, known as virtualization, in contrast, follows the
"Multiple App, One Box" model under which a number of virtual machines can run on a single host, each of which runs an operating system in its own discrete execution environment. The virtualization environment provides multiple users the illusion of each having an entire "private" (virtual) machine all to him/herself alone isolated from other users, while all users share the a single physical host. Another advantage of virtualization is that booting and restarting a virtual machine can be much faster than with a physical machine, since it may be possible to skip tasks such as hardware initialization.

In the example of FIG. 4, the virtual machine monitor 414, also referred to as a hypervisor, monitors and/or manages operations of one or more virtual machines running on a host in a virtualization environment. The virtual machine monitor herein can be but is not limited to VMWare, Xen, or other virtualization product. The virtual machine monitor 414 is a virtualization platform that enables and manages multiple virtual machines (and their operating systems) to run on the host 402 at the same time.

In the example of FIG. 4, the data securing module 412 is coupled to the encryption component 408 and the decryption component 410. The data securing module 412 can either be stand-alone software components operable to encrypt or decrypt the image of the virtual machine 404, or a software plugged-in to the virtual machine monitor 414 running on the host 402.

While the system 400 depicted in Figure 4 is in operation, the data securing module 412 detects if a new image of the virtual machine 404 is created or the content of an existing image of the virtual machine 404 has been changed. If such triggering event is detected, the data securing module triggers the encryption operation of the image of the virtual machine 402 via the encryption component 408 before saving the image to a non-volatile storage of the host 402. When the virtual machine 404 is later to be started or resumed operation on the host 402, the data securing module triggers the decryption operation of the image of the virtual machine 404 via the decryption component 410 before loading the image to a volatile storage of the host 402 from where the virtual machine runs. During the entire process, the virtual machine is monitored by the virtual machine monitor 414 running on the host 402.

One embodiment may be implemented using a conventional general purpose or a specialized digital computer or microprocessor(s) programmed according to the teachings of the present disclosure, as will be apparent to those skilled in the computer art. Appropriate software coding can readily be prepared by skilled programmers based on the teachings of the present disclosure, as will be apparent to those skilled in the software art. The invention may also be implemented by the preparation of integrated circuits or by interconnecting an appropriate network of conventional component circuits, as will be readily apparent to those skilled in the art.

One embodiment includes a computer program product which is a machine readable medium (media) having instructions stored thereon/in which can be used to program one or more hosts to perform any of the features presented herein. The machine readable medium can include, but is not limited to, one or more types of disks including floppy disks, optical discs, DVD, CD-ROMs, micro drive, and magneto-optical disks, ROMs, RAMs, EPROMs, EEPROMs, DRAMs, VRAMs, flash memory devices, magnetic or optical cards, nanosystems (including molecular memory ICs), or any type of media or device suitable for storing instructions and/or data. Stored on any one of the computer readable medium (media), the present invention includes software for controlling both the hardware of the general purpose/specialized computer or microprocessor, and for enabling the computer or microprocessor to interact with a human viewer or other mechanism utilizing the results of the present invention. Such software may include, but is not limited to, device drivers, operating systems, execution environments/containers, and applications.

The foregoing description of various embodiments of the claimed subject matter has been provided for the purposes of illustration and description. It is not intended to be exhaustive or to limit the claimed subject matter to the precise forms disclosed. Many modifications and variations will be apparent to the practitioner skilled in the art. Particularly, while the concept "module" is used in the embodiments of the systems and methods described above, it will be evident that such concept can be interchangeably used with equivalent software concepts such as, class, method, type, interface, component, bean, module, object model, process, thread, and other suitable concepts. While the concept "component" is used in the embodiments of the systems and methods described above, it will be evident that such concept can be interchangeably used with equivalent concepts such as, class, method, type, interface, module, object model, and other suitable concepts. Embodiments were chosen and described in order to best describe the principles of the invention and its practical application, thereby enabling others skilled in the relevant art to understand the claimed subject matter, the various embodiments and with various modifications that are suited to the particular use contemplated.

## Claims

1. A system, comprising:
an encryption component (108) embodied in a machine readable medium;
a decryption component (110) embodied in a machine readable medium;
a host (102) on which a software component (104) is deployed, wherein an image of the software component (104) has a plurality of pages (106);
a data securing engine (112) coupled to the encryption component (108) and the decryption component (110), which wherein in operation:
encrypts one of the plurality of pages (106) of the image of the software component (104) via the encryption component (108) when the image is created or its content is changed before saving said page to a non-volatile storage of the host;
decrypts an encrypted page (106) of the image of the software component (104) via the decryption component (110) only at startup and/or resume time of the software component (104).

2. A system of claim 1, wherein:
the host (102) is one of: a laptop PC, a desktop PC, a tablet PC, a PDA, an iPod, a server machine, a hard disk drive, a portable storage device, a mobile phone, and any electronic device capable of running the software component.

3. A system of claim 1 or claim 2, wherein:
the non-volatile storage of the host (102) is a hard disk drive, a ROM, a magnetic storage, an optic disc drive, or any other form of non-volatile storage that is operable to retains the image of the software component (104) even when the host (102) is powered off.

4. A system of any of claims 1 to 3, wherein:
the data securing engine (112) loads the decrypted page into a volatile storage of the host (102).

5. A system of claim 4, wherein:
the volatile storage is a RAM, a solid state storage, or any other form of volatile storage that only stores the image of the software component (104) when the software component (104) is running on the host (102).

6. A system of any of claims 1 to 5, wherein:
the data securing engine (112) encrypts and/or decrypts the one or more pages (106) of the image of the software component (104) via one or more cryptographic keys.

7. A system of claim 6, wherein:
the data securing engine (112) obtains the one or more cryptographic keys from either another physical or virtual device over a network or a removable storage device.

8. A system of claim 7, wherein:
the network is one of: internet, WAN, LAN, wireless network, Bluetooth, WiFi, and mobile communication network.

9. A system of claim 7, wherein:
the removable device is a smart card, a USB drive, or a portable disk drive.

10. A system of any claims 1 to 9, wherein:
the data securing engine (112) encrypts and/or decrypts only the pages (106) of the image of the software component (104) containing sensitive information.

11. A system of any of claims 1 to 9, wherein:
the data securing engine (112) selects a portion of the image of the software component (104) to be encrypted and decrypted and skips a portion of the image for encryption and decryption based on one or more of: address range, content, and owner of the image of the software component.

12. A system of claim 11, wherein:
the skipped portion includes an installed driver and/or an application not containing or dealing with sensitive data of the software component.

13. A system of any of claims 1 to 12, wherein the data securing engine (112) in alternative operation:
intercepts a snapshot of the image of the software component (104) when the snapshot is taken;
encrypts the snapshot of the image of the software component (104) before saving said snapshot to a non-volatile storage of the host (102);
decrypts the encrypted snapshot of the image of the software component (104) before loading the snapshot into a volatile storage of the host (102).

14. A system of any claims 1 to 12 further comprising:
a virtual machine (404), rather than a software component, deployed at the host (402), wherein an image of the virtual machine (404) has a plurality of pages (406);
a virtual machine monitor (414) operable to manage the virtual machine (404) on the host (402)
wherein the data securing engine (112) in operation:
encrypts the plurality of pages (406) of the image of the virtual machine (404) via the encryption component (408) when said image is created or its content is changed before saving said image to a non-volatile storage of the host;
decrypts an encrypted page of the image of the virtual machine (404) via the decryption component (416) only at startup or resume time of the virtual machine (404).

15. A system of claim 14, wherein:
the virtual machine monitor (414) is VMWare, Xen, or other virtualization product.

16. A system of claim 14 or claim 15, wherein:
the data securing module (412) is a software component pluggable in the virtual machine monitor.

17. A method, comprising:
deploying a software component (104) to a host (102), wherein an image of the software component (104) has a plurality of pages (106);
encrypting one of the plurality of pages (106) of the image of the software component (104) when the image is created or its content is changed;
saving said page to of the image of the software component (104) to a non-volatile storage of the host (102);
decrypting an encrypted page of the image of the software component (104) only at startup or resume time of the software component (104);
loading the decrypted image of the software component into a volatile storage of the host.

18. A method of claim 17, further comprising:
encrypting or decrypting the one or more pages (106) of the image of the software component via one or more cryptographic keys.

19. A method of claim 18, further comprising:
obtaining the one or more cryptographic keys from either another physical or virtual device over a network or a removable storage device.

20. A method of any of claims 17 to 19, further comprising:
encrypting or decrypting only the pages of the image of the software component containing sensitive information.

21. A method of any of claims 17 to 20, further comprising:
selecting a portion of the image of the software component (104) to be encrypted and decrypted and skips a portion of the image for encryption and decryption based on one or more of: address range, content, and owner of the image of the software component.

22. A method of any of claims 17 to 20, further comprising:
selecting the one or more pages of the software component (104) to be encrypted and decrypted based on one or more of: address range, content, and owner of the software component.

23. A method of claim 17, alternatively comprising:
intercepting a snapshot of the image of the software component (104) when the snapshot is created;
encrypting the snapshot of the image of the software component (104);
saving said snapshot to a non-volatile storage of the host (102).

24. A method of claim 23, further comprising:
decrypting the encrypted snapshot of the image of the software component (104);
loading the snapshot into a volatile storage of the host (102).

25. A method of claim 17, comprising:
deploying a virtual machine (404), rather than a software component, to a host, wherein an image of the virtual machine (404) has a plurality of pages (406);
encrypting one of the plurality of pages of the image of the virtual machine (404) when the image is created or its content is changed;
saving said page (406) of the image of the virtual machine (404) to a non-volatile storage of the host (402);
decrypting an encrypted page of the image of the virtual machine (404) only at startup or resume time of the virtual machine (404);
loading the decrypted page of the image of the virtual machine into a volatile storage of the host (402).
